# EUROPEAN PATENT SPECIFICATION

(11) **EP 0 470 208 B1**
(45) Date of publication and mention of the grant of the patent: **16.08.1995**
(21) Application number: 90909824.6
(22) Date of filing: 07.06.1990
(51) Int. Cl.: F16C 11/06, B60K 20/02

(54) **ARRANGEMENT FOR REDUCING PLAY IN A BALL JOINT**
ANORDNUNG ZUM VERRINGERN DES SPIELS IN EINEM KUGELGELENK
AGENCEMENT DE REDUCTION DU JEU DANS UNE ARTICULATION SPHERIQUE

(30) Priority: 19.06.1989 SE 8902197
(43) Date of publication of application: 12.02.1992
(73) Proprietor: SCANDMEC MECANIA AB, S-565 00 Mullsjö (SE)
(72) Inventor: SKOGWARD, Kenneth, S-561 49 Forsheda (SE)
(74) Representative: Mossmark, Anders
(86) International application number: SE9000397
(87) International publication number: WO9015935

(56) References cited:
- SE-B- 0 458 105
- US-A- 1 883 782
- US-A- 2 115 087
- US-A- 3 384 397

## Description

The present invention relates to a ball joint arrangement preferably with manoeuvre organs according to the preamble of the following claim 1.

### Prior art:

Ball joints for, for example, gear control are well known. A known problem at these is that very small tolerances are required between the ball and the bearing bush of the ball joint of the gear control in which the ball is located. Great tolerances make the gear control feel loose and inexact to handle. Therefore a rigid and distinct bearing of the gear control is strived at. Attempts for high precision made up to now have resulted in a great cassation of material and required extended visual examination, which in its turn leads to increased production costs.

### Technical problem:

Even if a high precision is attained at the production, wearing will arise due to the vibration which occurs in the gear control and is transferred to the bearing ball and the bearing bush, which gives rise to noise and a feeling of incomplete control over the positions of the gear control.

US-A-3 384 397 shows a ball joint arrangement according to the preamble of claim 1 which is self-adjusting to take up wear.

The object of the present invention is to bring about a ball joint arrangement which can be mounted in a simple and rational way.

### Solution:

Said object is obtained by means of an arrangement according to the characterizing part of the following claim 1.

### Brief description of drawings:

The invention will in the following be described more in detail by means of an embodiment example with reference to the attached drawings, on which
- Fig. 1: shows the arrangement in a section at a ball joint along the line A-A in Fig. 2,
- Fig. 2: shows the ball joint seen from above,
- Fig. 3: shows a part of the arrangement at the ball joint, and
- Fig. 4: shows a view of the part in Fig. 3.

### Best mode of carrying out the invention:

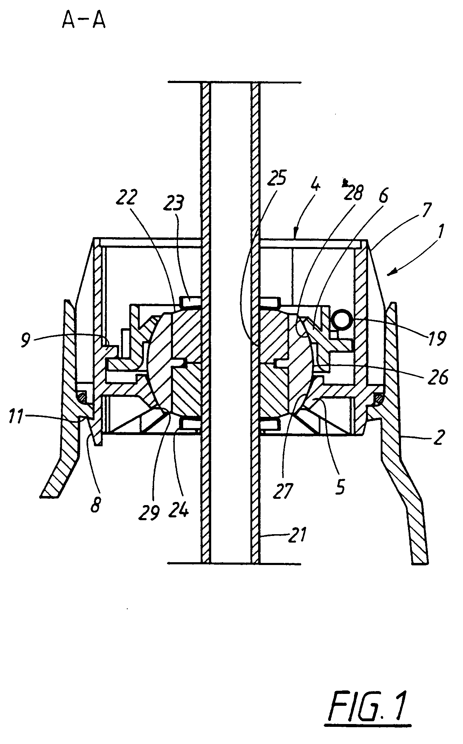

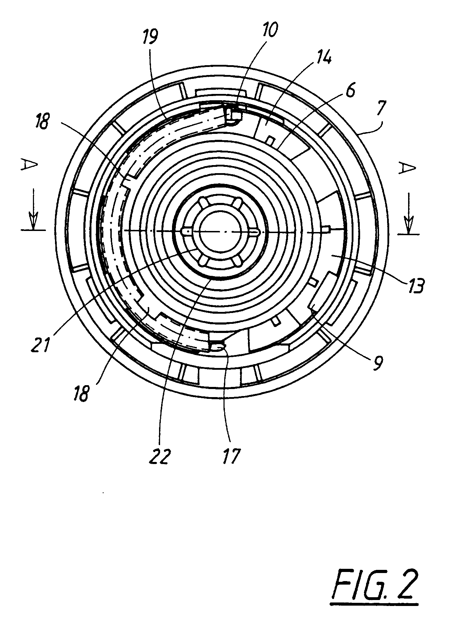

As is shown in Fig. 1 and 2, the arrangement according to the invention includes a ball joint 1 which has been mounted in a housing 2. The ball joint 1 comprises a bearing bush 4 with a cavity extending through the bearing bush. The bearing bush comprises a first part 5 and a second part 6, both with bearing surfaces shown only in section in the drawings. The first part 5 is integrated with a cylindrical mounting 7 and it comprises a substantially circular opening 29. Tongues 8, in the shape of hooks, extend from the mounting part 7 and they are adapted to snap against a notch 11 on the housing 2. The housing 2 is in its turn rigidly connected to a vehicle chassis not shown in the drawings.

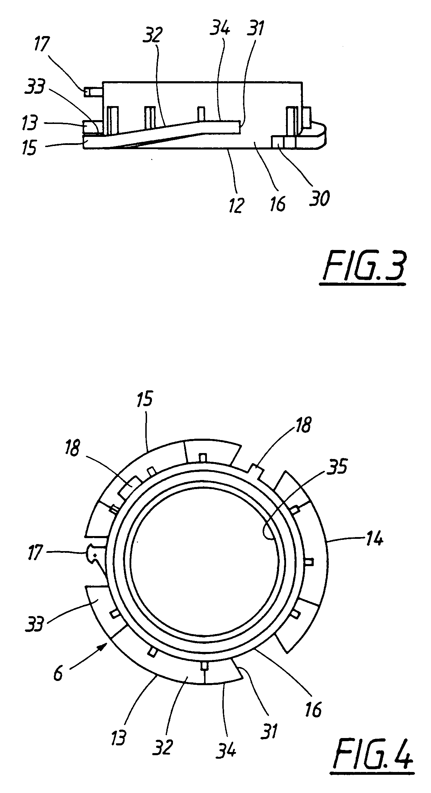

The second bearing bush part 6 has been arranged in the mounting part 7 of the part 4 and has the shape of a ring as is shown in the Fig. 3 and 4. The ring has a circular opening 35 corresponding to the opening 29 in the first part 5. From the edge part 12 of the ring, moveable engagement organs in the shape of three cut off flanges 13-15, extend directed radially outwards and hinged along the periphery of the ring at some distance from each other so that openings 16 are formed between the flanges. The flanges 13-15 have a certain pitch along the edge part of the ring, which pitch is lower than 10%, and preferably lower than 7%. As best appears from Fig. 3, each flange part 13-15 gets, by means of its pitch, a lower end part 30 and one upper flange part 31 on a somewhat higher level, which together delimit the openings 16. At the lower end part 13, the flanges have no pitch which in the example shown is the case also at the upper flange part of the flanges. The upwardly turned part of the flanges from the bearing bush part 5 forms engagement surfaces for engagement with the fixed engagement organs in part 5, which will be described more in detail below. Said engagement surfaces consist for each flange of an oblique surface part 32, which forms the above-mentioned pitch by accordingly deviating from a radial plane through the ball joint, whereas the flanges at their end parts show mutually parallel surface parties 33,34 located in separate radial planes through the ball joint. A hook 17 has been arranged in one of these openings and adapted to keep one end of a tension spring in the shape of a helical spring 19. A number of notches 18 are arranged along the edge part of the ring to maintain the spring 19 in its position, which is arranged to be stretched along a part of the circumference of the ring.

A long, pipe- or rod-shaped handle 21 is arranged through the ball joint through a cylindrical hole 25 in the ball 22, which is part of the ball joint and is adapted to abut between the first bush part 5 and the second bush part 6. The bearing ball 22 is axially stationary with regard to the handle, and in the example shown also non-turnable relative to this by means of locking rings 23,24. The bearing ball 22 has a spherical convex bearing surface 26, which can be a complete surface or composed of a plurality of part surfaces with spherical shape. Bearing surfaces 27,28 of the parts 5,6 are concave ring-shaped spherical zones with a radius corresponding to the one of the bearing surface of the ball.

The mounting part 7 has on its inner barrel-shaped surface a number of rigid engagement organs in the shape of wings 9 with a peripheral extension which is shorter than the extension of the openings 16 and which preferably have some pitch which substantially corresponds to the pitch of the flanges 13-15 in the second bush part 6. The number of engagement organs correspond to the number of flanges 13-15. An attachment organ 10 for attachment of the second end of the spring 19, has been arranged on the mounting part 7, preferably on one of the wings 9.

Through the construction of the ball joint its mounting may occur in a simple and rational way. The bearing ball 22 is mounted on the gear control 21 in a predetermined position at which the ball is located by means of locking rings 23,24. Thereafter, the gear control 21 is inserted through the opening 29 of the first bush part 5 and mounting part 7 of the bearing part 4, until the ball abuts with a part of its bearing surface 26 against the bearing surface 27 of the first bush part 5, whereafter the second bush part is fed over the gear control 21 against the ball 22.

During mounting, one has to observe that the second bush part 6 is turned so that the openings 16 will register with the wings 9 so that the bush part can be fed past the same whereby the openings allow the wings to pass them, and the second bush part can be moved down in a direction towards the first bush part 5 until abutment with its bearing surface 28 against the bearing surface 26 of the bearing ball 22. Thereafter, the second part 6 is turned around the axis of the ball joint so that the flanges 13-15, that is, the moveable engagement organs, will come into engagement with the wings, that is, the stationary engagement organs and the bush parts will be pressed towards its other end with their bearing surfaces 27,28 against the bearing surface 26 on the bearing ball 22. The second bush part 6 serves, consequently, as a nut where the flanges 13-15 form the threads of the nut in engagement with threads of the screw, which are formed by the wings 9 in the first bush part 5. Thereafter the spring 19 is attached with its end at the hook 17 on the second bush part 6 and is threaded around the edge part 12 of the bush part below the notches 18 in the turning direction for the mounting of the bush parts. The second end of the spring 19 is attached to the attachment means 10 on the mounting part 7 so that the second bush part by means of the spring force will strive at continuously being drawn in a direction towards the first bush part 5. This means that even if the bearing ball is worn, it will be maintained in a distinct position as the second bush part 6 continuously is subjected to a turning moment and strives at being drawn against the ball. Due to the small pitch of the flanges 13-15, a small spring force is required to give a well adapted small, axially directed force of the first bush part 5 in the direction against the ball, and hence give a zero play against the ball and bearing surfaces of the bush parts, whereas an appreciably greater axial counter force is required to separate the bush parts. As low initial forces are working on the ball through its mounting in the bush parts 5 and 6, self-lubricating materials may be used in the ball joint, such as nylon, acetal- or polyester plastics, which give rise to a low friction.

The invention is not limited to the above described embodiment shown in the example, but can be varied within the scope of the following claims. For example, the stationary engagement organs 9 may be without pitch. Further the flanges may show a pitch over its whole length.

## Claims

1. A ball joint arrangement (1), preferably with a manoeuvre organ (21), which extends through the ball joint (1), which comprises a bearing ball (22) abutting against and being maintained in a certain position by a bearing bush (4) within the ball joint (1), which bearing bush (4)) in turn comprises at least two parts (5, 6), the bearing bush (4) comprising a first part (5) in which a first bearing surface (27) is arranged, and a second part (6) in which a second bearing surface (28) turned towards the first bearing surface (27) is arranged, the first and the second parts (5, 6) embracing to some extent the bearing ball (22), the second part (6) being turnable in relation to the first part (5), the second part (6) of the bearing bush (4) consisting of a ring (6), comprising first engagement organs (13-15), protruding from the edge part (12) of the ring (6), adapted to cooperate with second engagement organs (9) at the bearing bush (4) for controlling the distance between the first and the second parts (5, 6) by means of turning of the first part (5) in relation to the second part (6) so that a continuous turning moment being applied on the ring (6) gives the ring (6) a force working in the direction towards the bearing ball (22), the ring (6) being kept in a stretched position against the bearing ball (22) by means of a stretching organ (19), consisting of a spring (19), which maintains said continuous turning moment the protruding first engagement organs (13-15) on the ring (6) being mainly oblique in relation to a turning plane of the ring (6), **characterized in** that said first engagement organs (13-15) consist of at least two, preferably three, protruding flanges (13-15), which are spaced at some distance from each other along the periphery of the ring so as to form openings (16) between the flanges (13-15), in that said second engagement means (9) are formed in the shape of wings (9) which correspond in number to the number of openings between the flanges (13-15) and which are located so that, during mounting of the bearing bush (4), they can be inserted through the openings (16) and, in the assembled state of the bearing bush (4), come into engagement with the corresponding flanges (13-15) and through the action of the spring (19) achieve said abutting of the two parts (5, 6) of the bearing bush (4) against the bearing ball (22).

2. Ball joint arrangement according to claim 1, **characterized in** that the flanges (13-15) consist of a part with a pitch of less than 10%, and, at one of the ends of each flange (13-15), a part without any pitch.

## Patentansprüche

1. Kugelgelenkanordnung (1), vorzugsweise mit einem Steuerorgan (21), das sich durch das Kugelgelenk (1) erstreckt, bestehend aus einer Lagerkugel (22), die mittels einer Lagerbuchse (4) innerhalb des Kugelgelenks (1) gegen eine bestimmte Stellung anliegt und in dieser gehalten ist, wobei die Lagerbuchse (4) ihrerseits wenigstens zwei Abschnitte (5, 6) besitzt, wobei die Lagerhülse (4) einen ersten Abschnitt (5), in dem eine erste Lagerfläche (27) angeordnet ist, und einen zweiten Abschnitt (6) aufweist, in dem eine zweite Lagerfläche (28) angeordnet ist, die in Richtung auf die erste Lagerfläche (2) gedreht ist, wobei die ersten und zweiten Abschnitte (5,6) in einem gewissen Umfang die Lagerkugel (22) umgreifen, wobei der zweite Abschnitt (6) bezüglich des ersten Abschnitts (5) drehbar ist, wobei der zweite Abschnitt (6) der Lagerbuchse (4) aus einem Ring (6) besteht, welcher erste Eingriffsorgane (13, 15) aufweist, die von dem Randabschnitt (12) des Rings vorstehen und die für das Zusammenwirken mit dem zweiten Eingriffsorgan (9) an der Lagerbuchse (4) zur Steuerung der Entfernung zwischen dem ersten und dem zweiten Abschnitt (5, 6) mittels Drehen des ersten Abschnitts (5) bezüglich des zweiten Abschnitts (6) derart vorgesehen sind, daß eine auf den Ring (6) ausgeübte kontinuierliche Drehbewegung dem Ring (6) eine Kraft verleiht, die in Richtung zu der Lagerkugel (22) wirkt, wobei der Ring (6) in einer Spannstellung gegen die Lagerkugel (22) mittels eines Spannorgans (19) gehalten ist, das aus einer Feder (19) besteht, welche das kontinuierliche Drehmoment aufrecht erhält, wobei die vorstehenden ersten Eingriffsorgane (13 - 15) auf dem Ring (6) hauptsächlich schräg bezüglich einer Drehebene des Ringes montiert sind,
dadurch gekennzeichnet,
daß die ersten Eingriffsorgane (13 - 15) aus wenigstens zwei, vorzugsweise drei vorstehenden Flanschen (13 - 15) bestehen, welche um eine gewisse Entfernung voneinander längs des Umfangs des Rings so beabstandet sind, daß sie Öffnungen (16) zwischen den Flanschen (13 - 15) bilden, daß die zweiten Eingriffsorgane (9) in Form von Flügeln (9) gebildet sind, die in ihrer Zahl der Zahl der Öffnungen zwischen den Flanschen (13 - 15) entsprechen, und die derart angeordnet sind, daß sie während der Montage der Lagerbuchse (4) durch die Öffnungen (16) einsetzbar sind und im zusammengebauten Zustand der Lagerbuchse (4) in Eingriff mit den zugehörigen Flanschen (13 - 15) treten und durch die Wirkung der Feder (19) das Anliegen der beiden Abschnitte (5, 6) der Lagerbuchse (4) gegen die Lagerkugel (22) erreichen.

2. Kugelgelenkanordnung nach Anspruch 1, dadurch gekennzeichnet,
daß die Flansche (13 - 15) aus einem Abschnitt mit einer Steigung von weniger als 10% und an einem der Enden jedes Flansches (13 - 15) aus einem Abschnitt ohne irgendeine Steigung bestehen.

## Revendications

1. Ensemble à joint à rotule (1) muni de préférence d'un organe de manoeuvre (21) passant dans le joint à rotule (1), qui comporte une rotule (22) d'appui qui est en butée contre un manchon (4) d'appui et qui est maintenue dans une certaine position par ce manchon à l'intérieur du joint à rotule (1), le manchon d'appui (4) comportant à son tour au moins deux parties (5, 6), le manchon (4) comportant une première partie (5) dans laquelle une première surface d'appui (27) est disposée et une seconde partie (6) dans laquelle une seconde surface d'appui (28) est tournée vers la première surface d'appui (27), la première et la seconde partie (5, 6) entourant dans une certaine mesure la rotule (22), la seconde partie (6) pouvant tourner par rapport à la première partie (5), la seconde partie (6) du manchon d'appui (4) étant formée d'un anneau (6) qui comprend des premiers organes (13-15) de coopération qui dépassent de la partie de bord (12) de l'anneau (6) et destinés à coopérer avec des seconds organes (9) de coopération placés sur le manchon d'appui (4) pour le réglage de la distance comprise entre la première et la seconde partie (5, 6) par rotation de la première partie (5) par rapport à la seconde partie (6), si bien qu'un moment continu de rotation appliqué à l'anneau (6) exerce sur l'anneau (6) une force qui agit dans la direction de la rotule (22), l'anneau (6) étant maintenu en position tendue contre la rotule (22) par un organe (19) de tension constitué d'un ressort (19) qui maintient le moment continu de rotation, les premiers organes de coopération en saillie (13-15) sur l'anneau (6) étant essentiellement obliques par rapport à un plan de rotation de l'anneau (6), caractérisé en ce que les premiers organes de coopération (13-15) sont constitués d'au moins deux joues (13-15) en saillie et de préférence de trois joues qui sont à la même distance les unes des autres à la périphérie de l'anneau afin qu'elles forment des ouvertures (16) entre les joues (13-15), et en ce que les seconds organes de coopération (9) sont formés avec la configuration d'ailettes (9) dont le nombre correspond au nombre d'ouvertures formées entre les joues (13-15) et qui sont positionnées de manière que, lors du montage du manchon d'appui (4), elles puissent être introduites par les ouvertures (16) et, à l'état assemblé du manchon d'appui (4), elles puissent venir au contact des joues correspondantes (13-15) et, grâce à l'action du ressort (19), puissent assurer la mise en butée des deux parties (5, 6) du manchon d'appui (4) contre la rotule (22).

2. Ensemble à joint à rotule selon la revendication 1, caractérisé en ce que les joues (13-15) sont formées d'une partie ayant un pas inférieur à 10 % et d'une partie n'ayant aucun pas et placée à l'une des extrémités de chaque joue (13-15).
